Europäisches Patentamt

European Patent Office

Office européen des brevets

(11) Numéro de publication: **0 199 643**
**B1**

(12) **FASCICULE DE BREVET EUROPEEN**

(45) Date de publication du fascicule du brevet:
**18.01.89**

(51) Int. Cl.⁴: **B65D 51/16**

(21) Numéro de dépôt: **86400823.0**

(22) Date de dépôt: **16.04.86**

---

(54) **Bouchon de réservoir.**

---

(30) Priorité: 24.04.85 FR 8506211

(43) Date de publication de la demande:
**29.10.86 Bulletin 86/44**

(45) Mention de la délivrance du brevet:
**18.01.89 Bulletin 89/3**

(84) Etats contractants désignés:
**DE GB IT**

(56) Documents cités:
**GB-A- 2 115 528**
**US-A- 3 286 873**
**US-A- 4 036 386**

(73) Titulaire: **BENDIX France, 126, rue de Stalingrad,
F-93700 Drancy(FR)**

(72) Inventeur: **Côme, Philippe, 12 route de Montlévêque,
F-60300 Senlis(FR)**
Inventeur: **Aires, Raphael, 53 rue Riquet,
F-75019 Paris(FR)**

(74) Mandataire: **Lejet, Christian et al, Division Technique
Service Brevets BENDIX Europe 126, rue de Stalingrad,
F-93700 Drancy(FR)**

---

ACTORUM AG

## Description

La présente invention se rapporte aux bouchons de réservoir et plus particulièrement à un tel bouchon pour un réservoir de fluide de maître cylindre.

Il est nécessaire qu'un bouchon de réservoir permette le libre passage d'air de l'intérieur du réservoir vers l'atmosphère, par exemple, lors de variations du niveau de fluide hydraulique dans le réservoir. Il est important aussi que le bouchon empêche l'entrée d'agents contaminants et notamment de liquides extérieurs dans le réservoir.

On connaît du document FR-A 2 521 934 un bouchon de réservoir de fluide hydraulique comportant un agencement de valve et dans lequel les canaux d'admission et de sortie se trouvent dans le filetage entre le bouchon et le corps du réservoir. Ce bouchon présente des inconvénients en ce qu'il nécessite plusieurs pièces et en ce que, si le réservoir est soumis à des secousses importantes, il est possible que du fluide hydraulique arrive à sortir par le filetage.

Le document US-A 4 036 386 décrit un bouchon pour un bidon de liquide dans lequel le passage d'air entre l'intérieur du bidon et les filetages du bouchon comprend un moyen de chicane formé par deux parois, chacune étant sensiblement en forme d'hélice. Ce dispositif présente également des inconvénientes en ce qu'il est possible que le liquide arrive à sortir par les filetages si le bidon est secoué.

L'invention a donc pour objet de proposer un bouchon de réservoir qui soit de construction simple et où les risques d'entrée d'agents contaminants ou de sortie de fluide hydraulique sont réduits.

Pour ce faire, l'invention concerne un bouchon de réservoir prévu pour monter sur un réservoir comportant un filetage extérieur, du type comprenant un filetage intérieur un joint d'étanchéité et un moyen de chicane dans un passage de fluide entre les filetages et l'intérieur du bouchon (US-A 4 036 386), caractérisé en ce que le moyen de chicane comprend au moins une chambre d'accumulation intermédiaire dans le passage, la chambre d'accumulation comprenant une entrée de fluide et une sortie de fluide, et en ce que, quand le bouchon est monté sur le réservoir, l'entrée se trouve en bas de la chambre et la sortie se trouve en haut de la chambre.

D'autre caractéristiques et avantages de la présente invention ressortiront de la description suivante d'un mode de réalisation donné à titre illustratif, mais nullement limitatif, faite en relation avec les dessins annexés, sur lesquels:

- la Figure 1 est une vue en coupe longitudinale d'un bouchon de réservoir selon l'invention;
- la Figure 2 est une vue du dessus de la structure de chicanes du bouchon de la Figure 1; et
- les Figures 3, 4, et 5 sont des vues en coupe longitudinale selon la lignes 3–3, 4–4 et 5–5 de la Figure 2.

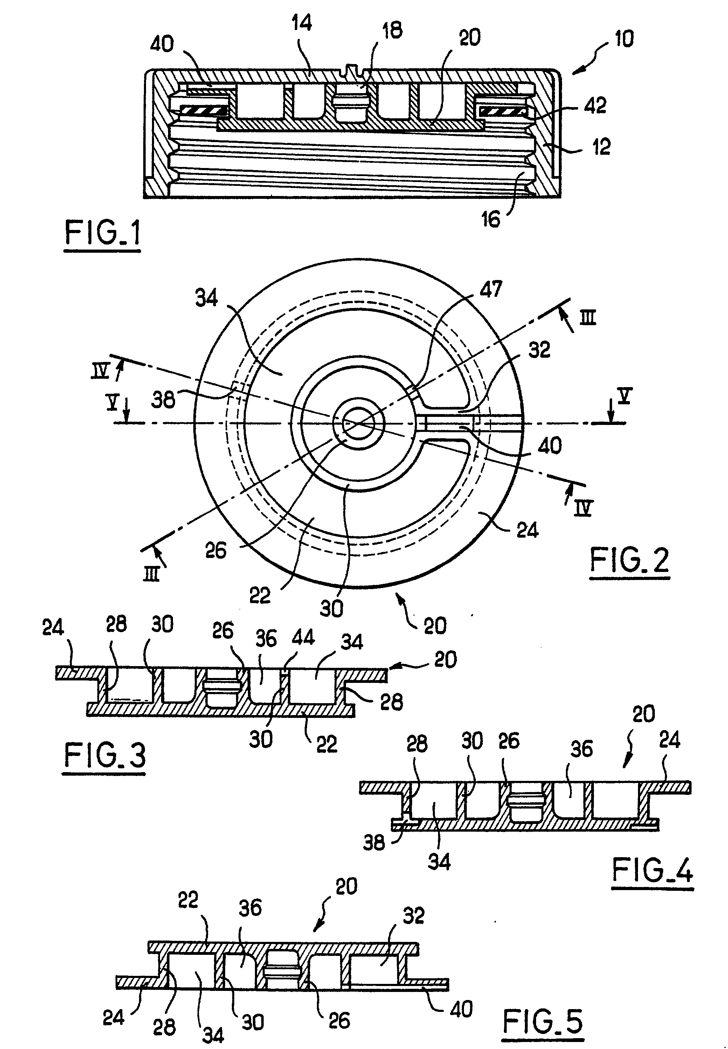

Comme représenté sur la Figure 1, le bouchon de réservoir 10 comprend une paroi généralement cylindrique 12 et un fond circulaire 14. La paroi 12 comporte un filetage 16 pour le montage du bouchon sur le corps d'un réservoir (non-représenté). Le bouchon comporte, au centre du fond 14, une projection 18 sur laquelle est emmanchée une structure de chicanes 20.

Comme on le voit mieux sur les Figures 2 à 5, la structure de chicanes 20 comprend un fond généralement circulaire 22, une collerette annulaire 24 et un moyeu 26 par l'intermédiaire duquel la chicane 20 est montée sur la projection 18. La structure de chicanes 20 comporte deux parois généralement annulaires avantageusement concentriques 28, 30 qui, avec une cloison radiale 32 définissent une première chambre extérieure sensiblement annulaire 34. Une deuxième chambre intérieure sensiblement annulaire 36 est définie entre la paroi intérieure 30 et le moyeu 26. Quand le bouchon est en place la première chambre 34 communique avec l'intérieur du réservoir (non-représenté) par une petite ouverture 38 (voir la Figure 4) entre la paroi 28 et le fond 22. De la même manière, la deuxième chambre 36 communique avec le filetage 16 entre le bouchon et le corps du réservoir par un petit passage 40 formé dans la cloison 32 et la collerette annulaire 24 (voir la Figure 5). Quand le bouchon est monté sur le réservoir un joint annulaire 42 isole le passage 40 de l'intérieur du réservoir, et donc le seul passage possible entre l'intérieur du réservoir et l'atmosphère se fait par l'intermédiaire des ouverture et passage 38 et 40, via les chambres 34 et 36.

La paroi 30 entre la première et la deuxième chambres comporte un orifice de trop-plein 44 (voir la Figure 3) dont la fonction sera décrite plus avant.

Le passage d'air entre l'intérieur du réservoir et l'atmosphère se fait par l'ouverture 38, la première et la deuxième chambres 34, 36 par l'intermédiaire du trop-plein 44, le passage 40 et le filetage 16 entre le bouchon 10 et le réservoir. En revanche, grâce à la forme de la chicane, la possibilité que du fluide hydraulique arrive à sortir du réservoir est réduite à un minimum, étant donné que, lors d'une secousse, le fluide hydraulique de fuite doit d'abord remplir la première chambre 34 par l'ouverture 38, et puis seulement une fois que cette chambre est remplie, passer par le trop-plein 44 dans la deuxième chambre 36, de sorte que ce n'est que quand la deuxième chambre 36 est à son tour remplie que le fluide hydraulique peut s'écouler par le passage 40 vers le filetage 16 et l'extérieur du réservoir. Etant donné que l'ouverture 38 se trouve au fond de la première chambre, il est peu problable que cette dernière arrive à se remplir.

De la même façon, l'entrée d'agents contaminants dans l'intérieur du réservoir est empêchée par la forme de la structure de chicanes 20.

Il est envisagé que la forme de la chicane pourrait être autre que celle représentée sur les Figures. La première et la deuxième chambres 34, 36 pourraient être autres que concentriques et pourraient avoir une autre forme, par exemple, semi-circulaire ou polygonale. Même la structure de chicanes peut être réalisée de divers éléments distincts lors de la fabrication du bouchon.

## Revendications

1. Bouchon de réservoir (10), prévu pour être monté sur un réservoir comportant un filetage extérieur, du type comprenant un filetage intérieur (16) un joint d'étanchéité (42) et un moyen de chicane (20) dans un passage de fluide entre les filetages et l'intérieur du bouchon, caractérisé en ce que le moyen de chicane (20) comprend au moins une chambre d'accumulation (34) intermédiaire dans le passage, la chambre d'accumulation (34) comprenant une entrée de fluide (38) et une sortie de fluide (47), et en ce que, quand le bouchon est monté sur le réservoir, l'entrée (38) se trouve en bas de la chambre (34) et la sortie (47) se trouve en haut de la chambre.

2. Bouchon de réservoir selon la revendication 1, caractérisé en ce qu'il comprend une deuxième chambre (36) dans le passage, en série avec la première chambre (34).

3. Bouchon de réservoir selon la revendication 3, caractérisé en ce que la première et la deuxième chambres (34, 36) communiquent l'une avec l'autre par un orifice de trop-plein (44).

4. Bouchon de réservoir selon la revendication 3, caractérisé en ce qu'une chambre (36) communique avec les filetages (16) par un passage haut (40), et l'autre chambre communique avec l'intérieur du réservoir par un passage bas (38).

5. Bouchon de réservoir selon l'une des revendications 2 à 4, caractérisé en ce que les deux chambres (34, 36) sont sensiblement concentriques.

## Patentansprüche

1. Verschluß (10) für Behälter mit Außengewinde mit einem Innengewinde (16), einer Dichtung (42) und einer Hindernisvorrichtung (20) in einer Strömungsverbindung zwischen den Gewinden und dem Inneren des Verschlusses, dadurch gekennzeichnet, daß die Hindernisvorrichtung (20) aus mindestens einer in der Strömungsverbindung angeordneten Speicherkammer (34) besteht, die einen Flüssigkeitsanlaß (38) und -auslaß (47) aufweist, und daß, wenn der Verschluß auf dem Behälter angeordnet ist, die Eintrittsöffnung (38) sich in der Kammer (34) unten und die Austrittsöffnung (47) oben befindet.

2. Verschluß nach Anspruch 1, dadurch gekennzeichnet, daß eine mit der ersten Kammer (34) in Reihe geschaltete zweite Kammer (36) in der Strömungsverbindung vorgesehen ist.

3. Verschluß nach Anspruch 2, dadurch gekennzeichnet, daß die erste (34) und die zweite Kammer (36) über einen Überlauf (44) miteinander in Verbindung stehen.

4. Verschluß nach Anspruch 3, dadurch gekennzeichnet, daß die Kammer (36) mit dem Gewinde (16) über einen oberen Durchgang (40) verbunden ist und daß die andere Kammer mit dem Inneren des Behälters über einen unteren Durchgang (38) verbunden ist.

5. Verschluß nach einem der Ansprüche 2 bis 4, dadurch gekennzeichnet, daß die beiden Kammern (34,36) im wesentlichen konzentrisch angeordnet sind.

## Claims

1. Cap for a reservoir (10), intended to be mounted on a reservoir having an external thread, of the type comprising an internal thread (16), a sealing gasket (42) and a labyrinth means (20) in a fluid passage between the threads and the inside of the cap, characterized in that the labyrinth means (20) comprises at least one intermediate accumulation chamber (34) in the passage, the accumulation chamber (34) comprising a fluid inlet (38) and a fluid outlet (47), and in that, when the cap is mounted on the reservoir, the inlet (38) is situated at the bottom of the chamber (34) and the outlet (47) is situated at the top of the chamber.

2. Cap for a reservoir according to claim 1, characterized in that it comprises a second chamber (36) in the passage, in series with the first chamber (34).

3. Cap for a reservoir according to claim 3 (sic), characterized in that the first and second chambers (34, 36) communicate with one another through an overflow opening (44).

4. Cap for a reservoir according to claim 3, characterized in that one chamber (36) communicates with the threads (16) through a high-level passage (40), and the other chamber communicates with the inside of the reservoir through a low-level passage (38).

5. Cap for a reservoir according to one of claims 2 to 4, characterized in that the two chambers (34, 36) are generally concentric.

EP 0 199 643 B1

FIG.1

FIG.2

FIG.3

FIG.4

FIG.5